# EUROPEAN PATENT SPECIFICATION

(11) **EP 2 572 570 B1**
(45) Date of publication and mention of the grant of the patent: **04.11.2015**
(21) Application number: 11783592.6
(22) Date of filing: 18.05.2011
(51) Int. Cl.: A01G 9/02, A01G 27/02, A01G 1/00

(54) **PLANTING CONTAINER**
PFLANZENBEHÄLTER
CONTENANT DE PLANTATION

(30) Priority: 19.05.2010 JP 2010115293
(43) Date of publication of application: 27.03.2013
(73) Proprietor: Suntory Holdings Limited, Kita-ku Osaka-shi Osaka 530-8203 (JP)
(72) Inventor: HASHIMOTO, Masaki, Tokyo 107-8631 (JP)
(74) Representative: Vossius & Partner Patentanwälte Rechtsanwälte mbB
(86) International application number: PCT/JP2011/061449
(87) International publication number: WO 2011/145658

(56) References cited:
- WO-A1-2006/134938
- JP-A- 2005 295 876
- JP-A- 2010 068 735
- JP-U- H0 443 955
- JP-U- 63 155 356
- JP-U- S63 155 356

## Description

### TECHNICAL FIELD

The present invention relates to a plant cultivation container including a plant cultivation container body having a water reservoir portion formed by a bottom portion and side walls standing upward from outer peripheries of the bottom portion, for reserving planting water therein, and a water outlet formed in part of the side walls for allowing planting water present in the water reservoir portion to overflow to the outside.

### BACKGROUND ART

Conventionally, the plant cultivation container is configured to discharge planting water from the water outlet directly to a floor surface on which the plant cultivation container is placed, and no device for guiding wastewater flowing over through the water outlet to the outside has particularly been known.

JP S63 155356 discloses a water tank used for water culture.

### SUMMARY OF INVENTION

### Technical Problem

When a plurality of the conventional plant cultivation containers noted above are placed on the floor surface of a rooftop of a building, for example, to plant the rooftop with trees, planting water discharged from the water outlet of the plant cultivation containers flows out directly on the floor surface of the rooftop. In such a case, the floor surface remains wet or may sometimes have algae or mold growing on it owing to planting water flowing out directly on the floor surface since such planting water often contains nutrition including a fertilizer, as a result of which an external appearance might be spoiled.

Therefore, the object of the present invention is to provide a plant cultivation container for solving the above-noted problem to guide wastewater from the plant cultivation container to a predetermined place and easily maintaining an aesthetic appearance thereof.

### Solution to Problem

A first characteristic feature of a plant cultivation container according to the present invention lies in comprising: a plant cultivation container body including a water reservoir portion formed by a bottom portion and side walls standing upward from outer peripheries of the bottom portion, for reserving planting water therein, and a water outlet formed in part of the side walls for allowing planting water present in the water reservoir portion to overflow to the outside; and a side wall cover for covering at least one of the side walls of the plant cultivation container body from the outside, wherein the side wall cover includes a fixing member removably attached to the side wall, a gutter member for receiving planting water flowing over through the water outlet and discharging the same to the outside of the plant cultivation container, and a cover member positioned opposite to an opening of the gutter member from above for connecting the fixing member and the gutter member, the fixing member, gutter member and cover member being provided along an outer periphery of the side wall.

According to the first characteristic feature of the present invention, the simple arrangement in which the fixing member of the side wall cover is brought into contact with and attached to the side wall of the plant cultivation container body allows excess of planting water reserved in the water reservoir portion of the plant cultivation container body flows over through the water outlet to be received in the gutter member of the side wall cover and guided from a flow-out portion formed in one end of the gutter member to the outside of the plant cultivation container body.

Hence, it is possible to protect the floor surface on which the plant cultivation container body is placed from spoilage of the external appearance caused by propagation of algae or mold by providing the flow-out portion of the gutter member in a predetermined water collecting portion formed in the floor or guiding water from the gutter member to the water collecting portion using a separate water pipe, for example.

In addition, an opened upper portion of the gutter member is covered by the cover member to improve the external appearance. Thus, wastewater from the plant cultivation container body is guided to the predetermined place to maintain the aesthetic appearance of a flower bed.

A characteristic feature of a further embodiment of present invention lies in that a support portion is provided inside of the cover member for supporting feedwater piping for feeding planting water to the water reservoir portion.

According to the above-noted characteristic feature, the feedwater piping for the water inlet can be supported by the support portion by attaching the side wall cover of the plant cultivation container of the present invention to the side wall provided upstream of the plant cultivation container body through the fixing member. Thus, the feedwater piping is covered by the cover member and thus stable attachment is achieved without exposing the feedwater piping to the outside, as a result of which the aesthetic appearance is improved.

A characteristic feature of a further embodiment of present invention lies in that an upper feedwater space having the support portion and a lower discharge space having the gutter member are provided inside of the cover member to be juxtaposed to each other vertically, the feedwater space and the discharge space communicating with each other over the entire length thereof through the opening of the gutter member.

According to the above-noted characteristic feature, since the support portion for the feedwater piping and the gutter member are provided to be juxtaposed to each other vertically, a dimension (width) of the side wall cover with respect to a flowing direction of planting water in the plant cultivation container body can be reduced to improve the aesthetic appearance as the flower bed further.

A characteristic feature of a further embodiment of present invention lies in that the gutter member is provided with an overhang portion extending obliquely more inward to the plant cultivation container body than a perpendicular direction, and wherein the support portion extends obliquely upward and outward from part of the overhang portion.

According to the above-noted characteristic feature, since the overhang portion is provided, even when planting water powerfully flows out of a gutter opening of the water outlet, water is contained in the gutter member relatively calmly without splashing toward the plant cultivation container body. In addition, since the support portion is supported by the gutter member through part of the overhang portion, a sufficient mechanical strength for supporting the feedwater piping can be achieved.

A characteristic feature of a further embodiment of the present invention lies in that the cover member is provided with a ceiling portion extending outward from the fixing member to the plant cultivation container body, and a vertical wall portion extending downward from an extreme end of the ceiling portion, the vertical wall portion having an inner surface connected to the overhang portion through the support portion.

According to the above-noted characteristic feature, since the support portion for supporting the feedwater piping is also connected to the vertical wall portion of the cover member, a more increased mechanical strength can be achieved. Further, since the whole unit formed of the entire gutter member including not only the opening thereof but also an outer peripheral surface thereof and the support portion is arranged inside of the cover member, the aesthetic appearance as the flower bed can be further improved.

### BRIEF DESCRIPTION OF DRAWINGS

Fig. 1 is a partly exploded perspective view of a plant cultivation container placed outdoors;
Fig. 2 is a perspective view of the plant cultivation container;
Fig. 3 is a top plan view of the plant cultivation container showing its function;
Fig. 4 is a vertical sectional view of the plant cultivation container, taking along a feed-discharge channel;
Fig. 5 is a vertical sectional view of a side cover provided downstream of a plant cultivation container body;
Fig. 6 is a vertical sectional view of a side cover provided upstream of the plant cultivation container body;
Fig. 7 is a partly cut-away perspective view of the side cover in one used condition;
Fig. 8 is a partly cut-away perspective view of the side cover in another used condition;
Fig. 9 is a partly cut-away perspective view of the side cover in a further used condition;
Fig. 10 is a vertical sectional view of the side cover corresponding to Fig. 5 in a modified embodiment; and
Fig. 11 is a vertical sectional view of the side cover corresponding to Fig. 6 in the modified embodiment.

### DESCRIPTION OF EMBODIMENTS

Embodiments of the present invention will be described hereinafter with reference to the drawings.

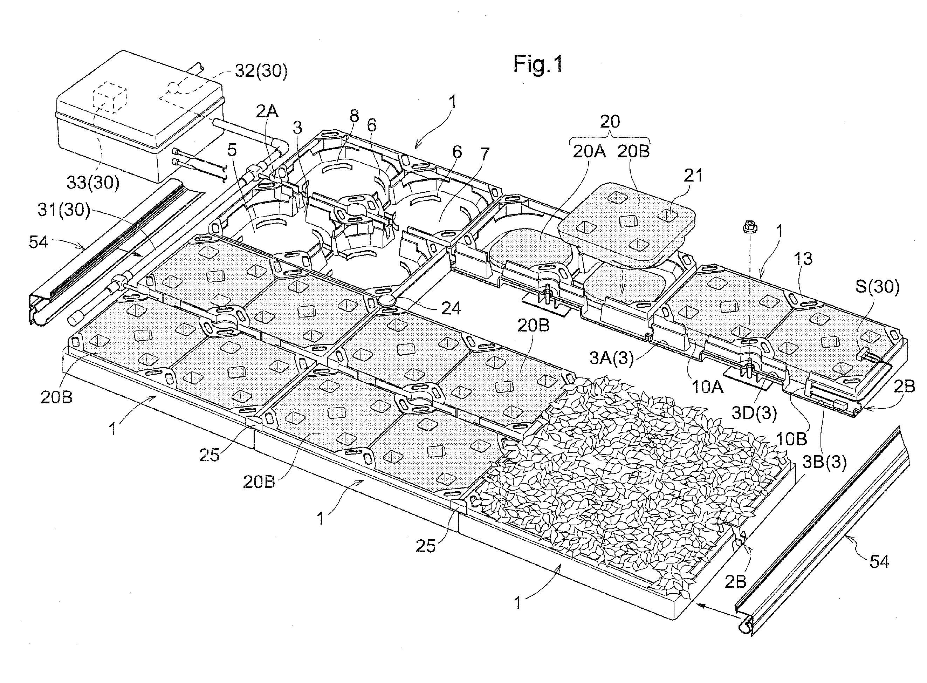

Fig. 1 is one example of a flower bed placeable outdoors such as on a roof top of a building, and includes a plurality of plant cultivation container bodies 1 each integrally formed of resin, plant cultivation bed materials 20 each disposed in the plant cultivation container 1, and feedwater equipment 30 for supplying planting water to the plant cultivation containers 1.

Each plant cultivation container body 1 has a generally square shape as viewed from the top, and includes a bottom face 5a (one example of a bottom portion), side walls E standing up from outer peripheries of the bottom face 5a, and a water reservoir portion 5 formed by the bottom face 5a and inner wall faces 5b of the side walls E for reserving planting water.

Further, a water inlet 2A is formed in part of a first side wall E1 used in an upstream side with respect to a flowing direction of planting water for introducing planting water into the plant cultivation container body 1, while a water outlet 2B is formed in part of a second side wall E2 used in a downstream side with respect to the flowing direction of planting water for allowing planting water present in the water reservoir portion 5 to overflow to the outside.

Since each plant cultivation container body 1 has a generally square configuration, the plurality of container bodies are arranged in tiles vertically and horizontally as shown in Fig. 1 thereby to form the flower bed having a rectangular shape as a whole. Further, a ratio of a vertical dimension to a horizontal dimension of the rectangular shape is variable by adjusting the number of the plant cultivation container bodies 1.

In the example of Fig. 1, side covers 54 (one example of side wall covers) for covering side faces of the plant cultivation container body 1 are provided in the upstream side where the water inlet 2A is provided and in the downstream side where the water outlet 2B is provided of four sides of the rectangular flower bed. As a result, when a plants is planted in a plant cultivation section 4 that will be described in detail later, an effect in appearance is achieved that the plurality of plant cultivation container bodies 1 arranged to have a rectangular shape as a whole form a single plant cultivation container in cooperation with the side covers 54 provided in the upstream side and the downstream side.

The arrangement of the side covers 54 applied in this manner allows to a channel for planting water overflowing the plant cultivation container body 1 through the water outlet 2B and instruments such as feedwater piping 31 mounted in the vicinity of the water inlet 2A to come into sight of a viewer of the flower bed less easily. On the other hand, the side covers may be provided to surround all the four sides of the rectangular flower bed.

### (Configuration of Plant Cultivation Container Body)

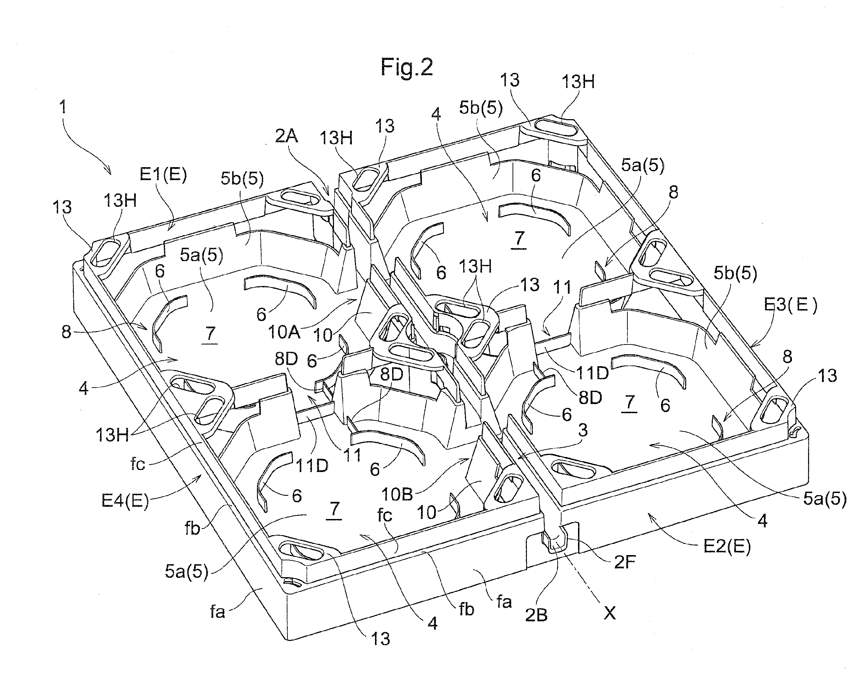

The plant cultivation container body 1 will be described in detail hereinafter. As shown in Fig. 2, at a center of the first side wall E1 constituting the upstream side wall E of the plan cultivation container body 1 is provided the water inlet 2A for introducing planting water into the plant cultivation container body 1. At a center of the second side wall E2 opposite to the first side wall E1 is provided the water outlet 2B for allowing excessive planting water to overflow the plant cultivation container body 1 to be discharged.

An axis X connecting midpoints of the two side walls E1 and E2 extends at the center of the plant cultivation container body 1 parallel with remaining third and fourth side walls E3 and E4, and a linear feed-discharge channel 3 runs along the axis X. The water inlet 2A and the water outlet 2B are positioned at opposite ends of the feed-discharge channel 3, and a beak-shaped gutter opening 2F projects laterally from the water outlet 2B.

In Fig. 2, on each of a right side and a left side of the feed-discharge channel 3 are arranged two generally square-shaped plant cultivation sections 4 along the feed-discharge channel 3. Four in total of the plant cultivation sections 4 collectively form the plant cultivation container body 1 having an outer shape of a general square as a whole as viewed from the top.

Each of the plant cultivation bed materials 20 is formed of a porous material having a function of supporting the plant while allowing growth of its root, and a function of absorbing and holding planting water necessary for growth. As shown in Fig. 1, herein, the plant cultivation bed material 20 consists of a lower bed material 20A for absorbing fed planting water, and an upper bed material 20B placed on the lower bed material 20A for supporting the plant. In the upper bed material 20B is formed a recess 21 for planting a seedling of a flowering plant, for example. The plant cultivation bed material 20 (20A, 20B) used herein is formed of a mixture of urethane, crushed wood chips and the like, and is configured to hold moisture and air in a balanced manner nearly uniformly from top to bottom, and at the same time, to easily hold air necessary for the growth of the root.

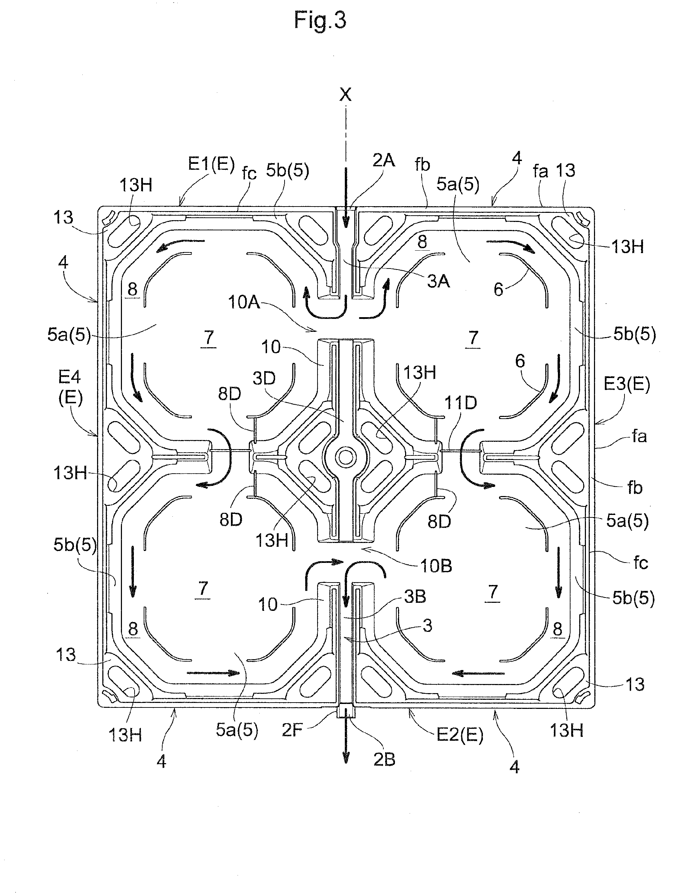

As shown in Figs.2 and 3, each of the plant cultivation sections 4 is provided with a single water reservoir container 5 (one example of water reservoir portion) for pooling the plant cultivation water. Therefore, the feed-discharge channel 3 serves as a groove-shaped feed-discharge channel disposed next to one side of each water reservoir container 5, and the two water reservoir containers 5 are arranged on the right and left sides of and next to the feed-discharge channel 3 so that they are opposed across the feed-discharge channel 3. The water reservoir container 5 has eight inner wall faces 5b (one example of side wall) extending obliquely upward from an outermost periphery of a generally octagonal bottom face 5a (one example of bottom portion), to form a mortar shape. The water reservoir container 5 is connected to the side walls E1, E2, E3 and E4 through only upper ends of the four inner wall faces 5b extending generally parallel with any of the four inner side members E1, E2, E3 and E4 from among the eight inner wall faces 5b.

Four low plate-shaped projections 6 stand upward at positions closer to the center by a predetermined distance from the outermost periphery of the bottom face 5a of the water reservoir container 5.

A generally octagonal area inside the plate-shaped projections 6 forms a bed material accommodation part 7 for placing the lower bed material 20A thereon. One of roles of the plate-shaped projection 6 is to fix the lower bed material 20A to a proper position at the center of the bottom face 5a in a proper posture, by fixing a lower end portion of the lower bed material 20A to the inside of the plate-shaped projections 6 in a manner nearly fitted thereinto.

An outside of the plate-shaped projections 6 forms a surrounding feedwater channel 8 surrounding the entire circumference of the lower end portion of the lower bed material 20A. In the surrounding feedwater channel 8, the lower bed material 20A is not present, and thus basically the plant cultivation water freely moves to and fro.

It should be noted that, as viewed from the top, the upper bed material 20B has a larger outer diameter than that of the lower bed material 20A, and when the upper bed material 20B is placed on the lower bed material 20A, an outer periphery of the upper bed material 20B is positioned so as to be nearly fitted into inner faces of the eight inner wall faces 5b of the water reservoir container 5.

Accordingly, beneath the upper bed material 20B is formed a tunnel-shaped water channel that surrounds the entire circumference of the lower bed material 20A.

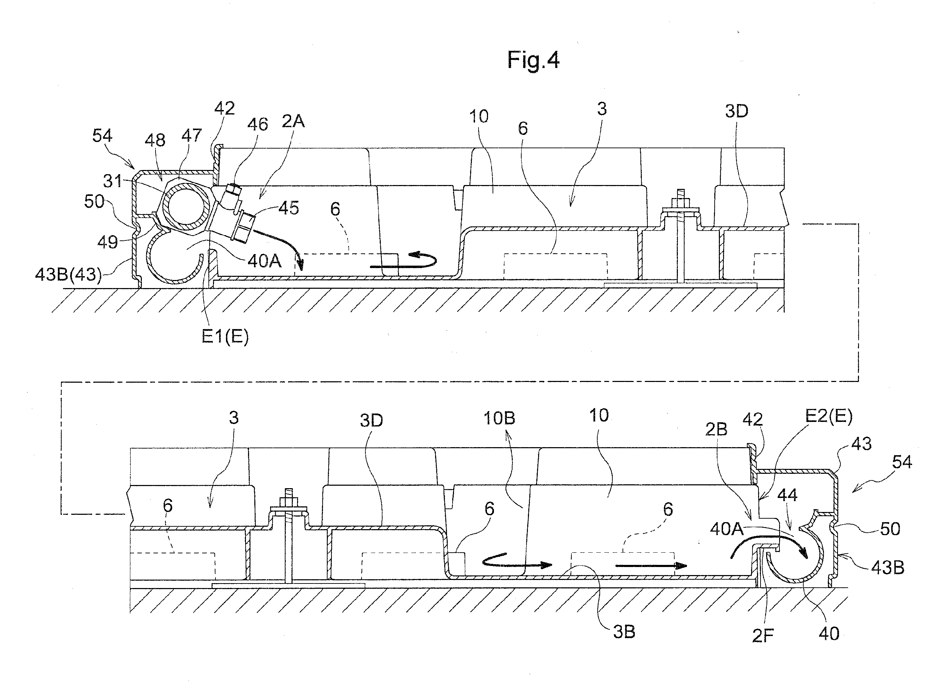

As shown in Fig. 4, in an intermediate portion with respect to the water flow direction of the feed-discharge channel 3 is formed a second weir member 3D which divides the feed-discharge channel 3 into a first channel 3A on the upstream side and a second channel 3B on the downstream side, and pools planting water to a predetermined depth in the first channel 3A.

In addition, as shown in Figs. 2 to 4, between the feed-discharge channel 3 and the water reservoir container 5 is provided a plate-shaped partition wall 10 for partitioning the space into those two regions. The partition wall 10 is provided with a first opening 10A for allowing the first channel 3A of the feed-discharge channel 3 to communicate with the surrounding feedwater channel 8 of the plant cultivation section 4 on the upstream side, and a second opening 10B for allowing the second channel 3B of the feed-discharge channel 3 to communicate with the surrounding feedwater channel 8 of the plant cultivation section 4 on the downstream side, both openings being formed as cut-out portions. The second weir member 3D having a certain length extends linearly from a downstream end portion of the first opening 10A to an upstream end portion of the second opening 10B.

As shown in Fig. 2, between the water reservoir container 5 on the upstream side and the water reservoir container 5 on the downstream side which are disposed along the feed-discharge channel 3 is formed a connection opening 11 for allowing planting water to move to and fro. A third weir member 11D is formed in the connection opening 11 for pooling planting water to a predetermined depth.

Part of each surrounding feedwater channel 8 is provided with a first weir member 8D for regulating a circulation direction of planting water entering the surrounding feedwater channel 8 from the water inlet 2A through the first opening 10A or the second opening 10B.

The two first weir members 8D provided in the surrounding feedwater channels 8 of the water reservoir containers 5 on the upstream and downstream sides extend parallel with the axis X in the same manner in a front-rear direction across the third weir member 11D, and are arranged symmetrically about the third weir member 11D as viewed from the top.

Referring to Fig. 3, when the description is made with respect to only the plant cultivation sections 4 on the right side of the axis X, the first weir member 8D provided in the upstream water reservoir container 5 is configured to connect the vicinity of a downstream end portion of the plate-shaped projection 6 located on a lower left side in the drawing to the closest inner wall face 5b. The first weir member 8D provided in the downstream water reservoir container 5 is configured to connect the vicinity of an upstream end portion of the plate-shaped projection 6 located on an upper left side in the drawing to the closest inner wall face 5b.

It should be noted that the position of the first weir member 8D is not specifically limited as long as the circulation of the plant cultivation water is regulated. For example, the first weir member 8D may be disposed at a position closer to the first opening 10A or the second opening 10B than the position illustrated in Fig. 3.

On upper ends of four corners of each plant cultivation section 4, generally triangular flanges 13 extend horizontally, respectively, so as to fill the four corners. Bottom faces of the respective flanges 13 are configured to engage with four sides of an upper face of the upper bed material 20B, and thus function to hold the upper bed material 20B to a proper position.

In addition, in a case where a great number of the plant cultivation containers 1 are connected in four directions, a worker can walk along and on at least part of the flanges 13 for the purpose of maintenance of the flowering plants during growth. The feed-discharge channel 3 may be used in a closed state in which the channel is closed with a removable rectangular lid (not shown).

In each flange 13, an oval through hole 13H extends parallel with an oblique short side of the bottom face 5a. In addition, the flange 13 is positioned higher than a height level of an upper end of the inner wall face 5b of the water reservoir container 5, and a gap is formed to extend parallel with the through hole 13H between the flange 13 and the inner wall face 5b. Through these gaps and the through holes 13H, a surface such as a floor surface on which the plant cultivation container body 1 is placed can be seen.

### (Connection of Container Bodies)

Fig. 1 shows two types of connection caps 24, 25 for achieving the connection of the plant cultivation container bodies 1 to one another. The circular connection cap 24 is used for unifying the four plant cultivation container bodies 1, while the semicircular connection cap 25 is used for unifying the two plant cultivation container bodies 1. In order to lock lower end portions or the like of the connection caps 24 and 25, each of the four corner portions of the plant cultivation container 1 has an engagement hole or engagement projection in shape of a quadrant.

For example, when the four plant cultivation container bodies 1 are arranged in a square shape as a whole, the four engagement holes are arranged to form a circle as a whole at the center of the square. When the circular connection cap 24 is fitted along this circle, the four plant cultivation container bodies 1 are unified. When the two plant cultivation container bodies 1 are arranged in the front-rear direction or a transverse direction, the two engagement holes are arranged to form a single semicircle as a whole. By locking the semicircular connection cap 25 along this semicircle, the two plant cultivation container bodies 1 are unified.

As shown in Fig. 4, when the plant cultivation container bodies 1 are connected in the front-rear direction, i.e. connected in such a manner that the feed-discharge channels 3 are arranged in series, the connection is made in such a manner that the gutter opening 2F provided on the water outlet 2B of the plant cultivation container body 1 on the upstream side in the flowing direction of planting water enters the water inlet 2A of the plant cultivation container body 1 on the downstream side.

A relationship in height among the weir members, the plate-shaped projection 6 and the gutter opening 2F, when the plant cultivation container 1 is placed on a horizontal plane, is set as follows: second weir member 3D > gutter opening 2F > third weir member 11D = water inlet 2A > plate-shaped projection 6 > first weir member 8D.

As shown in Fig. 1, the feedwater equipment 30 includes the feedwater piping 31 for supplying planting water to the water inlet 2A of the plant cultivation container body 1 disposed most upstream, an electromagnetic valve 32 disposed between waterworks and the piping 31, a moisture sensor S inserted into the upper bed material 20B positioned most downstream, and a controller 33 for switching the electromagnetic valve 32 between ON and OFF based on detection result of the moisture sensor S.

Each of the side walls E1, E2, E3 and E4 includes a main outer periphery fa linearly upward extending from a lowest part of the plant cultivation container body 1, a shoulder portion fb extending inwardly from an upper end of the main outer periphery fa, an auxiliary outer periphery fc linearly upward extending from the shoulder portion fb, and the aforementioned inner wall face 5b extending downward from an upper end of the auxiliary outer periphery fc. The auxiliary outer periphery fc is positioned slightly inward of the main outer periphery fa.

In other words, when the plant cultivation container bodies 1 are connected in the front-rear direction (the feed-discharge channels 3 are arranged in series), the main outer periphery fa of the first side wall E1 of the plant cultivation container body 1 and another main outer periphery fa of the second side wall E2 of the adjacent plant cultivation container body 1 are brought into contact with or arranged next to each other. On the other hand, when the plant cultivation container bodies 1 are connected in the lateral direction (the feed-discharge channels 3 are arranged in parallel), the main outer periphery fa of the third side wall E3 of the plant cultivation container body 1 and another main outer periphery fa of the fourth side wall E4 of the adjacent plant cultivation container 1 are brought into contact with or arranged next to each other.

Therefore, when the two plant cultivation container bodies 1 are connected, the water reservoir containers 5 neighboring across the side walls E1 and E2 or the side walls E3 and E4 are arranged apart from each other at a distance twice as long as a width of the shoulder portion fb.

The distance twice as long as the width of the shoulder portion fb is set to a value approximately the same as a width of the feed-discharge channel 3 or the like that separates two adjacent water reservoir containers 5 in the front-rear direction or the lateral direction in the plant cultivation container body 1. Accordingly, when the plant cultivation container bodies 1 are connected in the front-rear direction or lateral direction, the adjacent upper bed materials 20B disposed in the respective plant cultivation sections 4 are arranged apart from each other at an approximately constant distance regardless of the arrangement directions, which distance is nearly the distance twice as long as the width of the shoulder portion fb.

### (Function in Plant Cultivation Container Body)

Referring to Fig. 3, when the feedwater equipment 30 starts to supply planting water to the water inlet 2A of the plant cultivation container body 1 disposed most upstream, first, planting water enters the first channel 3A of the feed-discharge channel 3, hit the second weir member 3D, and is separated to right and left. Then, through the right and left first openings 10A, water enters the surrounding feedwater channels 8 (the water reservoir containers 5) of the right and left upstream plant cultivation sections 4.

Planting water that has entered the surrounding feedwater channel 8 flows through either or both of the upstream side or the downstream side of the channel in accordance with a degree of a slope where the container body is placed. However, after planting water flowing through the downstream side reaches the first weir member 8D disposed in the surrounding feedwater channel 8, water flowing through the upstream side becomes predominant, flows clockwise around outer circumferences of the lower bed material 20A and the plate-shaped projections 6 along the surrounding feedwater channel 8, and reaches near the first weir member 8D, thereby to rapidly surround the entire circumference of the lower bed material 20A with planting water. In this manner, the plate-shaped projection 6 also serves as a guide member for guiding planting water in a given circulation direction.

The lower bed material 20A immediately begins to absorb planting water, but when planting water is supplied at a rate above a speed of water absorption by the lower bed material 20A, water overflows the third weir member 11D and moves from the connection opening 11 to the downstream plant cultivation section 4.

It should be noted that, in the current embodiment, the four water reservoir containers 5 (water reservoir portion) are included in a single plant cultivation container body 1, but the two water reservoir containers 5 (water reservoir portion) provided parallel with the axis X on the right or left side and connected with each other through the connection opening 11 may be considered as a single water reservoir container 5 (water reservoir portion). Accordingly, the plant cultivation container body 1 is considered as having a configuration in which the feed-discharge channel 3, which is configured to supply planting water from outside to the water reservoir container 5 (water reservoir portion) and discharging planting water in the water reservoir container 5 (water reservoir portion) to outside, is provided in communication with the surrounding feedwater channel 8.

Planting water that has entered the surrounding feedwater channel 8 on the downstream plant cultivation section 4 flows clockwise about the outer circumference of the lower bed material 20A and the plate-shaped projections 6 along the surrounding feedwater channel 8 due to the presence of the first weir member 8D disposed on the downstream side of the channel, and reaches near the first weir member 8D, thereby to rapidly surround the entire circumference of the lower bed material 20A with planting water.

Part of planting water that has surrounded the lower bed material 20A enters the second channel 3B. While the lower bed material 20A immediately starts to absorb planting water, water overflows from the gutter opening 2F of the water outlet 2B and flows into the water inlet 2A of the downstream plant cultivation container body 1 when planting water is supplied from the upstream plant cultivation section 4 at a rate above the speed of water absorption by the lower bed material 20A.

Such behavior of planting water is performed nearly symmetrically in the right and left plant cultivation sections 4 across the feed-discharge channel 3.

It should be noted that the controller 33 may be set in such a manner that extra planting water is not discharged from the gutter opening 2F of the plant cultivation container body 1 disposed most downstream. Alternatively, the water outlet 2B of the plant cultivation container 1 disposed most downstream may be closed with a special plug member as necessary.

### (Side Cover)

As shown in Figs. 4 to 6, the side cover 54 is provided with a fixing member 42 to be attached to the side wall E of the plant cultivation container body 1, and a gutter member 40 for receiving planting water flowing over the water outlet 2B of the plant cultivation container body 1. With the side cover 54 being attached to the side wall E of the plant cultivation container body 1, the fixing member 42 and the gutter member 40 extend along the outer periphery of the side wall E. The fixing member 42 and the gutter member 40 are connected to each other through a cover member 43 opposite to an opening 40A of the gutter member 40 from above.

Inside the cover member 43 is provided a support portion 49, in addition to the gutter member 40, for supporting the feedwater piping 31 for feeding planting water to the water reservoir portion 5 of the plant cultivation container body 1.

When the side cover 54 is attached to the second side wall E2 provided downstream of the plant cultivation container body 1, the gutter member 40 becomes active. On the other hand, when the side cover 54 is attached to the first side wall E1 provided upstream of the plant cultivation container body 1, the support portion 49 for supporting the feedwater piping 31 becomes active.

The cover member 43 has a ceiling portion 43A extending from the fixing member 42 laterally and outwardly relative to the plant cultivation container body 1, and a vertical wall portion 43B extending downward from an end of the ceiling portion 43A to allow the cover member 43 to have a section of a generally inversed L-shape as a whole. A generally rectangular space enclosed by the cover member 43, the side wall E of the plant cultivation container body 1 and the floor surface is sectioned for convenience' sake into a lower discharge space S1 having the gutter member 44 and an upper feedwater space S2 having the support portion 49. The discharge space S1 and the feedwater space S2 are arranged next to each other vertically to communicate with each other through the opening 40A of the gutter member 44 over the entire length of the side cover 54.

The gutter member 40 has a communicating portion 40B having a semicircular section opened upward, and an overhang portion 40C extending further integrally from an upper end of an outer side of the communicating portion 40B. The overhang portion 40C extends obliquely more inward to the plant cultivation container body 1 than a perpendicular direction. Thus, even when planting water powerfully flows out of the gutter opening 2F of the water outlet 2B, water is contained in the communicating portion 40B relatively calmly without splashing toward the plant cultivation container body 1. The support portion 49 extends obliquely upward and outward from an upper end of the overhang portion 40C.

The support portion 49 is connected at the vicinity of an upper end thereof integrally with an inner surface of the vertical wall portion 43B through a plate-shaped first horizontal rib 58a extending generally horizontally. Further, the gutter member 40 is connected at the vicinity of a lower end thereof integrally with a lower end of the vertical wall portion 43B through a plate-shaped second horizontal rib 58b extending generally horizontally. A leg 58c extends downward from part of the second horizontal rib 58b.

Since a lower end of the leg 58c acting as a ground-contacting portion is positioned lower than the lower end of the gutter member 40, the gutter member 40 is not brought into contact with the floor surface. A closed space V1 is formed by the overhang portion 40C, the support portion 49, the first horizontal rib 58a, a lower half of the vertical wall portion 43B and the second horizontal rib 58b in cooperation with one another.

The fixing member 42 of the side cover 54 is attached to the side wall E1 (E2) of the plant cultivation container body 1 through a screw (not shown), for example, so that a back surface of the fixing member 42 is placed to face the auxiliary outer periphery fc of the side wall E1 (E2) essentially without forming a gap therebetween, a locking piece 64A projecting inward from an upper end of the fixing member 42 is engaged with an upper end of the side wall E1 (E2), and a lower end 42B of the fixing member 42 is placed on the shoulder portion fb of the side wall E1 (E2).

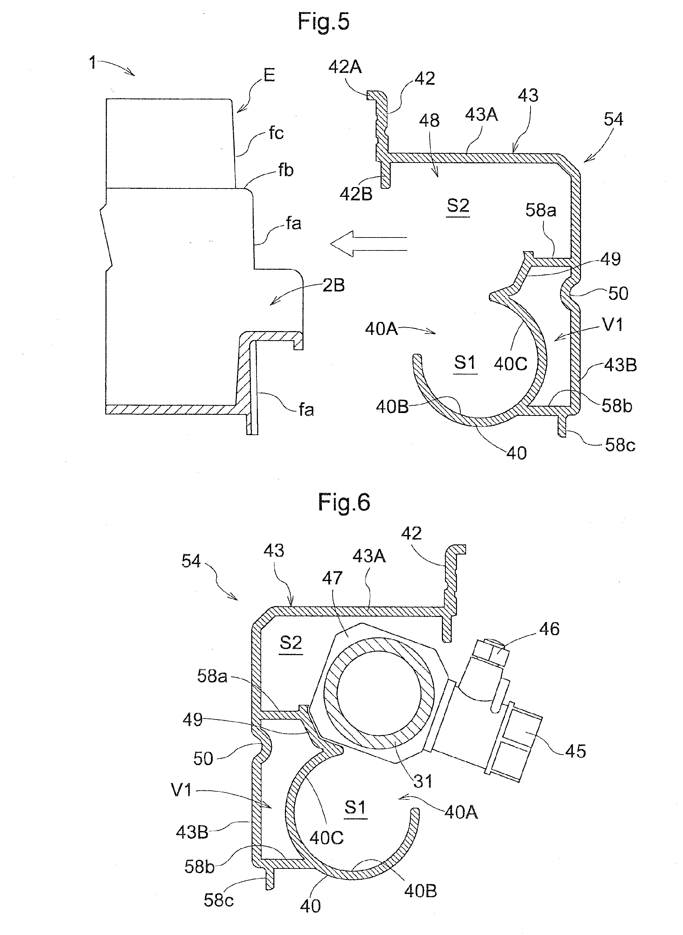

As understood from Figs. 4 and 5, when the side cover 54 is attached to the downstream side wall E2 of the plant cultivation container body 1, the gutter opening 2F of the water outlet 2B of the plant cultivation container body 1 overlaps the intake 40A of the gutter member 40 as viewed from the top. In other words, an extreme end of the gutter member 40 enters the intake 40A.

On the other hand, as shown in Figs. 4 to 6, when the side cover 54 is attached to the upstream side wall E1, the feedwater piping 31 is supported by the support portion 49 provided in the inner surface of the side cover 54. More particularly, a branch feedwater valve 46 having a feedwater nozzle 45 for the water inlet 2A is attached to a proper position of the feedwater piping 31 through a branch joint 47 having a generally rectangular section. The feedwater piping 31 is supported to the support portion 49 through the branch joint 47.

When the branch joint 47 is supported at a proper position of the support portion 49, the feedwater piping 31 is entirely contained in the feedwater space S2 and only the branch feedwater valve 46 having the feedwater nozzle 45 projects toward the plant cultivation container body 1 to allow the feedwater nozzle 45 to be located in a proper position above the water inlet 2A of the plant cultivation container body 1.

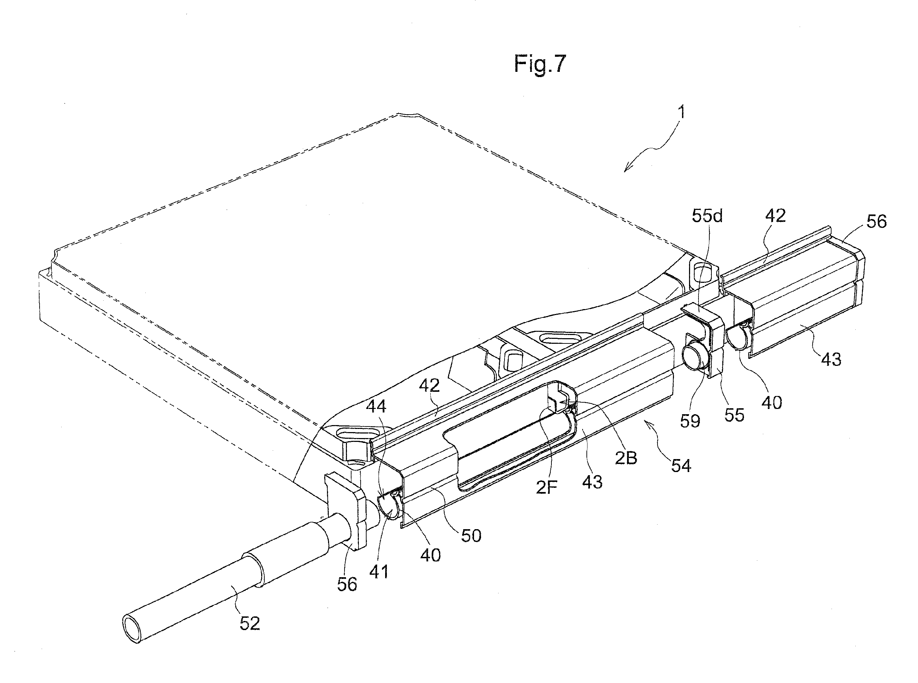

Since a standard length of the side cover 54 is determined to be several times larger than a width of a single plant cultivation container body 1, a single side cover 54 may be continuously provided along the side walls E of a plurality of the plant cultivation container bodies 1. Meanwhile, a plurality of side covers 54 may be connected to each other in a longitudinal direction through a connector joint 55 as shown in Figs. 7 to 9.

Since the connector joint 55 has a cover portion 55C having substantially the same configuration as the cover member 43 of the side cover 54, the connection is achieved with connector joint 55 being held between the two side covers 54 in appearance. While a space for receiving the feedwater piping 31 is defined in an upper inner side of the cover portion 55C, tubular fitting members 59 project from a lower inner side of the cover portion 55C to lateral opposite directions.

The tubular fitting member 59 has an outer diameter having substantially the same ratio of the circumference of a circle to its diameter as that of an inner circumference surface of the gutter 40. Therefore, two side covers 54 are connected to each other with the gutter members 40 associated with those side covers being fitted on the tubular fitting members 59. Planting water received in the gutter member 40 of one of the side covers 54 is discharged to the gutter member 40 of the other of the side covers 54 through the tubular fitting member 59 of the connector joint 55.

Both the side cover 54 and the connector joint 55 are basically integral mold products made of synthetic resin in the same manner as in the plant cultivation container body 1 to allow the cover member 43 of the side cover 54 to be fixed to the cover portion 55C of the connector joint 55 by an adhesive.

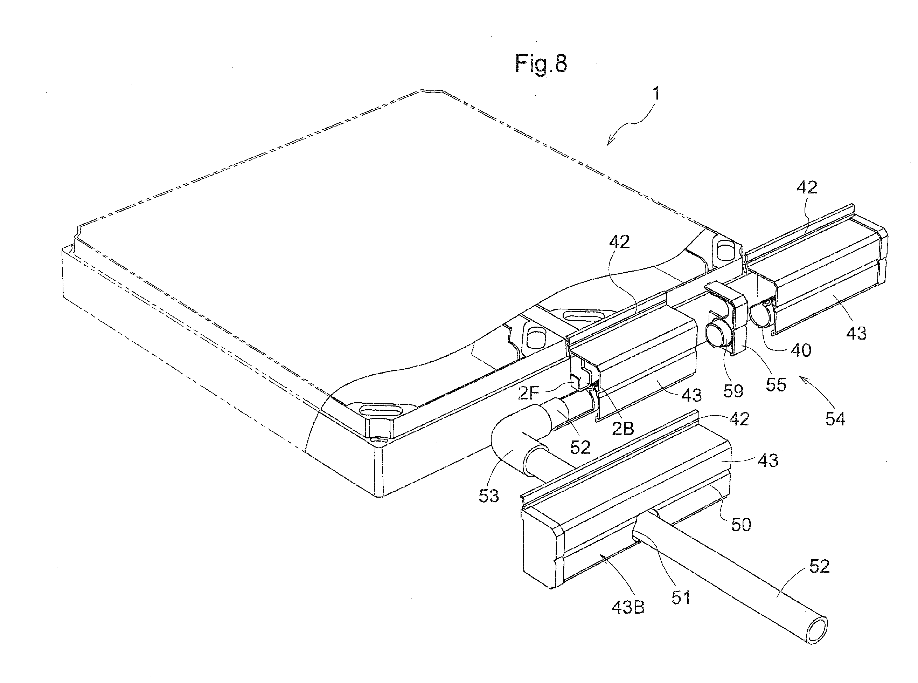

Figs. 7 and 8 show a specific method of discharging planting water that has been discharged to the gutter member 40 of the side cover 54 from the water outlet 2B of the plant cultivation container body 1 to the outside of the side cover 54.

Referring to Fig. 7, opposite ends of the side cover 54 are closed with end covers 56. One of the end covers 56 has a through bore formed therein in advance. A drainage pipe 52 extending through the through bore is fitted to a flowing portion 41 of the gutter member 40 to allow planting water that has been discharged to the gutter member 40 to be discharged to the outside of the side cover 54. The other of the end covers 56 has no through bore to prevent leakage of planting water received in the gutter member 40.

Referring to Fig. 8, the opposite ends of the side cover 54 are closed with the end covers 56 each having no through bore. Instead, a drainage through opening 51 is formed in part of the vertical wall portion 43B of the side cover 54. Here, a short relay drainage pipe 52 is fitted to the flowing portion 41 of the gutter member 40. An elbow-shaped pipe 53 has one end connected to the drainage pipe 52, and the other end extending through the drainage through opening 51 to the outside of the side cover 54. Planting water is discharged from the other end of the elbow-shaped pipe to the outside of the side cover 54 through another drainage pipe 52.

The drainage through opening 51 noted above may be formed by drilling machining, in which a grinder with a rotary cutter is pressed against a desired position of the vertical wall portion 43B of the side cover 54. In performing the drilling machining, a groove 50 recessed toward the first closed space V1 is formed in a vertically intermediate portion of the vertical wail portion 43B along the longitudinal direction of the side cover 54 as a guide member to guide the grinder to a target position to be pressed.

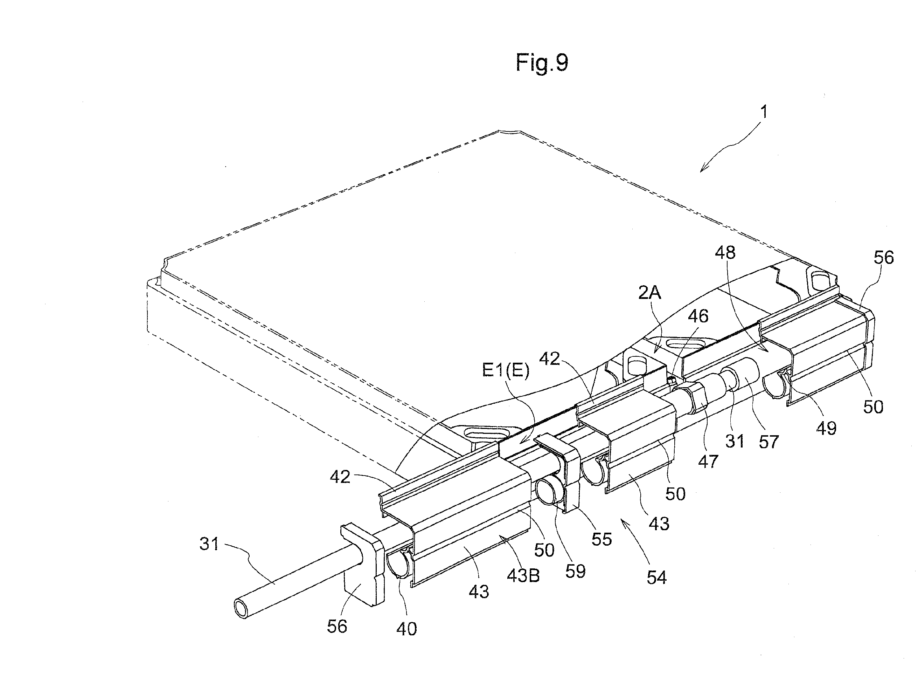

Fig. 9 shows a specific method of feeding planting water to the water outlet 2A of the plant cultivation container body 1 from the feedwater piping 31 supported to the inner surface of the side cover 54. Here, the opposite ends of the side cover 54 are closed with the end covers 56, one of which has a through bore formed therein in advance. The feedwater piping 31 extending through the through bore is supported by the support portion inside of the side cover 54. The other of the end covers 56 has no through bore. An extreme end of the feedwater piping 31 is closed with an end cap 57.

### [Other Embodiments]

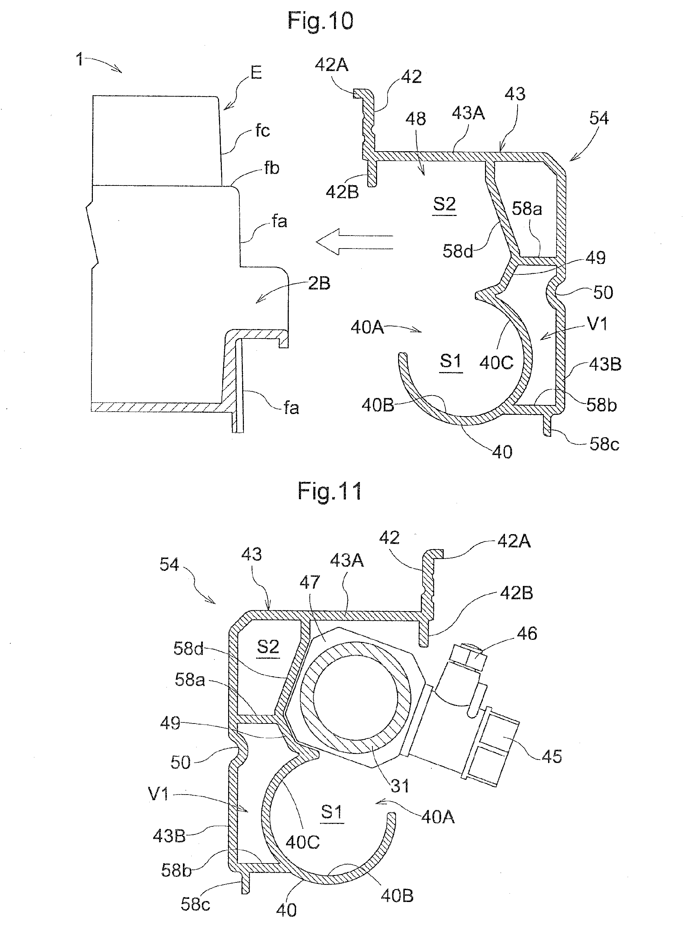

<1> In a modified embodiment shown in Figs. 10 and 11, the support portion 49 is connected integrally with a bottom surface of the ceiling portion 43A at an upper end thereof through a vertical rib 58d extending obliquely inward from the upper end of the support portion 49. The vertical rib 58d is formed with an angle at which the rib is brought into substantial surface contact with a back surface of the feedwater piping 31 supported by the support portion 49.

An outside portion of the communicating portion 40A of the gutter member 40, the overhang portion 40C, the support portion 49 and the vertical rib 58d cooperate with each other to define a closed space relative to the inner surface of the vertical wall portion 43B.

The closed space is divided into the lower first closed space V1 and the upper second closed space V2 through the above-noted first horizontal rib 58a.

In the current embodiment, the support portion 49 for supporting the feedwater piping 31 is supported by the gutter member 40 supported by the second horizontal rib 58b from below and simultaneously by the vertical rib 58d from above.

<2> The plant cultivation container body 1 may not necessarily be used as a unit connecting four plant cultivation sections 4. Instead, the side cover 54 may applied to the plant cultivation container body 1 formed of a single plant cultivation section 4 with the water reservoir container 5 being arranged adjacent to one side of the feed-discharge channel 3.

<3> The side cover 54 may have the gutter member 40 only. The piping space 48 of the feedwater piping 31 is dispensable.

While the above description includes the reference signs for facilitating the comparison with the accompanying drawings, the present invention is not limited to the arrangements shown in the drawings. Naturally, it is apparent to put the present invention into practical use in various modes without departing from the scope of the invention.

### DESCRIPTION OF REFERENCE SIGNS

- 1: plant cultivation container body (part of plant cultivation container)
- 2A: water inlet (water reservoir container)
- 2B: water outlet (water reservoir container)
- 5: water reservoir portion (water reservoir container)
- 5a: bottom face (bottom portion)
- 5b: wall face (side wall)
- 31: feedwater piping
- 40: gutter member
- 40A: receiving opening (opening)
- 40C: overhang portion
- 42: fixing member
- 43: cover member
- 43A: ceiling portion
- 43B: vertical wall portion
- 49: support portion
- 54: side cover (part of plant cultivation container; side wall cover)
- E: side wall
- S1: discharge space
- S2: feedwater space

## Claims

1. A plant cultivation container comprising:
a plant cultivation container body (1) including a water reservoir portion (5) formed by a bottom portion (5a) and side walls (5b) standing upward from outer peripheries of the bottom portion (5a), for reserving planting water therein, and a water outlet (2B) formed in part of the side walls (5b) for allowing planting water present in the water reservoir portion (5) to overflow to the outside; and
a side wall cover (54) for covering at least one of the side walls (5b) of the plant cultivation container body (1) from the outside,
wherein the side wall cover (54) includes a fixing member (42) removably attached to the side wall, a gutter member (40) for receiving planting water flowing over through the water outlet (2B) and discharging the same to the outside of the plant cultivation container, and a cover member (43) positioned opposite to an opening of the gutter member (40) from above for connecting the fixing member (42) and the gutter member (40), the fixing member (42), gutter member (40) and cover member (43) being provided along an outer periphery of the side wall.

2. The plant cultivation container claimed in claim 1, wherein a support portion is provided inside of the cover member (43) for supporting feedwater piping (31) for feeding planting water to the water reservoir portion (5).

3. The plant cultivation container claimed in claim 2, wherein an upper feedwater space having the support portion (49) and a lower discharge space having the gutter member (40) are provided inside of the cover member (43) to be juxtaposed to each other vertically, the feedwater space and the discharge space communicating with each other over the entire length thereof through the opening of the gutter member (40).

4. The plant cultivation container claimed in claim 2 or 3, wherein the gutter member (40) is provided with an overhang portion (40C) extending obliquely more inward to the plant cultivation container body (1) than a perpendicular direction, and wherein the support portion (49) extends obliquely upward and outward from part of the overhang portion (40C).

5. The plant cultivation container claimed in claim 4, wherein the cover member (43) is provided with a ceiling portion (43A) extending outward from the fixing member (42) to the plant cultivation container body (1), and a vertical wall portion (43C) extending downward from an extreme end of the ceiling portion (43A), the vertical wall portion having an inner surface connected to the overhang portion (40C) through the support portion (49).

## Patentansprüche

1. Pflanzenzuchtbehälter, der aufweist:
einen Pflanzenzuchtbehälterkörper (1), der einen Wasserspeicherabschnitt (5), der durch einen Bodenabschnitt (5a) und Seitenwände (5b) gebildet wird, die vom Außenumfang des Bodenabschnitts (5a) nach oben stehen, zum Bevorraten von Pflanzwasser darin, und einen Wasserauslass (2B) aufweist, der in einem Teil der Seitenwände (5b) ausgebildet ist, um es zu ermöglichen, dass im Wasserspeicherabschnitt (5) vorhandenes Pflanzwasser nach außen überläuft; und
eine Seitenwandabdeckung (54) zum Abdecken von mindestens einer der Seitenwände (5b) des Pflanzenzuchtbehälterkörpers (1) von außen,
wobei die Seitenwandabdeckung (54) ein Befestigungselement (42), das entfernbar an der Seitenwand angebracht ist, ein Rinnenelement (40) zur Aufnahme von Pflanzwasser, das durch den Wasserauslass (2B) überläuft, und dessen Ableitung zum Äußeren des Pflanzenzuchtbehälters und ein Abdeckelement (43) aufweist, das von oben gegenüber einer Öffnung des Rinnenelements (40) zum Verbinden des Befestigungselements (42) und des Rinnenelements (40) angeordnet ist, wobei das Befestigungselement (42), das Rinnenelement (40) und das Abdeckelement (43) längs eines Außenumfangs der Seitenwand vorgesehen sind.

2. Pflanzenzuchtbehälter nach Anspruch 1, wobei innerhalb des Abdeckelements (43) ein Halteabschnitt zum Halten einer Speisewasserrohrleitung (31) zum Zuführen von Pflanzwasser zum Wasserspeicherabschnitt (5) vorgesehen ist.

3. Pflanzenzuchtbehälter nach Anspruch 2, wobei ein oberer Speisewasserraum, der den Halteabschnitt (49) aufweist, und ein unterer Ableitungsraum, der das Rinnenelement (40) aufweist, innerhalb des Abdeckelements (43) so vorgesehen sind, dass sie vertikal nebeneinander angeordnet sind, wobei der Speisewasserraum und der Ableitungsraum über deren gesamte Länge durch die Öffnung des Rinnenelements (40) miteinander in Verbindung stehen.

4. Pflanzenzuchtbehälter nach Anspruch 2 oder 3, wobei das Rinnenelement (40) mit einem Überhangabschnitt (40C) versehen ist, der sich schief weiter nach innen zum Pflanzenzuchtbehälterkörper (1) als in eine senkrechte Richtung erstreckt, und wobei sich der Halteabschnitt (49) schief nach oben und von einem Teil des Überhangabschnitts (40C) nach außen erstreckt.

5. Pflanzenzuchtbehälter nach Anspruch 4, wobei das Abdeckelement (43) mit einem Deckenabschnitt (43A), der sich vom Befestigungselement (42) zum Pflanzenzuchtbehälterkörper (1) nach außen erstreckt, und einem vertikalen Wandabschnitt (43C) versehen ist, der sich von einem äußersten Ende des Deckenabschnitts (43A) nach unten erstreckt, wobei der vertikale Wandabschnitt eine Innenfläche aufweist, die durch den Halteabschnitt (49) mit dem Überhangabschnitt (40C) verbunden ist.

## Revendications

1. Conteneur pour la culture de plantes, comprenant :
un corps (1) de conteneur pour la culture de plantes présentant une section de réservoir d'eau (5) formée d'une section de fond (5a) et de parois latérales (5b) dressées à la périphérie extérieure de la section de fond (5a) pour le stockage d'eau de plantation, et une évacuation d'eau (2B) formée dans une partie des parois latérales (5b) pour permettre l'écoulement vers l'extérieur de l'eau de plantation présente dans la section de réservoir d'eau (5) ; et
un couvercle (54) de paroi latérale pour la couverture par l'extérieur d'au moins une des parois latérales (5b) du corps (1) de conteneur pour la culture de plantes,
où le couvercle (54) de paroi latérale comporte un élément de fixation (42) fixé de manière amovible à la paroi latérale, un élément en gouttière (40) pour la réception de l'eau de plantation débordant de l'évacuation d'eau (2B) et le refoulement de celle-ci vers l'extérieur du conteneur pour la culture de plantes, et un élément de couverture (43) monté par le dessus en face d'une ouverture de l'élément en gouttière (40) pour raccorder l'élément de fixation (42) et l'élément en gouttière (40), l'élément de fixation (42), l'élément en gouttière (40) et l'élément de couverture (43) étant prévus le long de la périphérie extérieure de la paroi latérale.

2. Conteneur pour la culture de plantes selon la revendication 1, où une section de support est prévue à l'intérieur de l'élément de couverture (43) pour supporter une conduite d'eau d'alimentation (31) destinée à alimenter la section de réservoir d'eau (5) en eau de plantation.

3. Conteneur pour la culture de plantes selon la revendication 2, où un compartiment d'eau d'alimentation supérieur présentant la section de support (49) et un compartiment d'évacuation inférieur présentant l'élément en gouttière (40) sont prévus à l'intérieur de l'élément de couverture (43) de manière à être superposés, le compartiment d'eau d'alimentation et le compartiment d'évacuation communiquant entre eux sur toute leur longueur par l'ouverture de l'élément en gouttière (40).

4. Conteneur pour la culture de plantes selon la revendication 2 ou la revendication 3, où l'élément en gouttière (40) est prévu avec une section en surplomb (40C) s'étendant obliquement plus, vers l'intérieur du corps (1) de conteneur pour la culture de plantes qua dans une direction perpendiculaire, et où la section de support (49) s'étend obliquement vers le haut et vers l'extérieur depuis une partie de la section en surplomb (40C).

5. Conteneur pour la culture de plantes selon la revendication 4, où l'élément de couverture (43) est prévu avec une section de sommet (43A) s'étendant extérieurement depuis l'élément de fixation (42) au corps (1) de conteneur pour la culture de plantes, et une section de paroi verticale (43C) s'étendant vers le bas depuis une extrémité de la section de sommet (43A), ladite section de paroi verticale ayant une surface intérieure raccordée à la section en surplomb (40C) par la section de support (49).
